(19) Europäisches Patentamt

European Patent Office

Office européen des brevets

(11) Publication number: **0 184 892 B1**

## (12) EUROPEAN PATENT SPECIFICATION

(45) Date of publication of patent specification: **19.08.92**　(51) Int. Cl.⁵: **G01N 27/62**

(21) Application number: **85305196.9**

(22) Date of filing: **22.07.85**

(54) Ionization detector for gas chromatography and method therefor.

(30) Priority: **14.12.84 GB 8431663**

(43) Date of publication of application:
**18.06.86 Bulletin 86/25**

(45) Publication of the grant of the patent:
**19.08.92 Bulletin 92/34**

(84) Designated Contracting States:
**CH DE FR GB LI NL**

(56) References cited:
**DD-A- 119 874**
**GB-A- 1 088 922**
**US-A- 3 238 367**

(73) Proprietor: **THE PERKIN-ELMER CORPORATION**
**761 Main Avenue**
**Norwalk Connecticut 06859-0074(US)**

(72) Inventor: **Simpson, Colin F.**
**7 Eaton Place Kemptown**
**Brighton Sussex BN2 1E4(GB)**

(74) Representative: **Skone James, Robert Edmund et al**
**GILL JENNINGS & EVERY 53-64 Chancery Lane**
**London WC2A 1HN(GB)**

EP 0 184 892 B1

## Description

This invention pertains to gas chromatography detectors of the ionization type.

Ionization detectors for gas chromatography are well known in the art. A comprehensive survey of such detectors as of 1961 may be found in an article entitled "Ionization Methods for the Analysis of Gases and Vapors" by J. E. Lovelock, Analytical Chemistry, Volume 33, No.2, February 1961, pages 162 - 178. The detectors reviewed in that article include, inter alia, the cross section ionization detector, the argon detector, and the electron capture detector. These detectors are characterised by the fact that each includes a source of ionizing radiation, i.e. a radioactive material. Such a detector is also described in DD-A-119 874.

The use of radioactive substances in chromatographic detectors necessarily introduces certain health risks into the laboratory and complicates such tasks as cleaning detectors after use. Because of these health risks, they are also subject to certain governmental controls which complicate their application and use.

Ionisation detectors have been developed which avoid the need for radioactive elements. However, in many cases, these are not suitable for use as argon and electron capture detectors for various reasons, including the fact that they may require gases other than the carrier or sample. Examples are the photoionisation detector referred to in the above-mentioned Lovelock article and the flame ionisation detector.

More recently, an electron capture detector has been developed which utilises a thermionic emission electron source, and is described in US Patent no 4,304,997. However, there are certain problems inherent in a thermionic detector. One such problem is that the emitting filament may be "poisoned" by components of many samples, ie. components may be absorbed on the surface and thereby reduce its thermal emission.

Another electron capture detector is described in US-A-3238367 in which a fluent material is bombarded with photoelectrons generated by light from an ultraviolet lamp falling on a metal cathode.

Starting from US-A-3238367 and in accordance with one aspect of the present invention, a detector for use in gas chromatography in which a rare gas is used as a carrier to elute samples from a chromatographic column includes a detection chamber, means for establishing an electrical potential across the chamber, and means for supplying free electrons to the chamber, the electron supplying means being positioned adjacent the chamber and comprises a solid photoemissive element and means for irradiating the photoemissive element with ultra-violet radiation to release electrons therefrom, is characterised in that the photoemissive element is positioned such that the UV light passes through the chamber before it impinges onto the photoemissive element, the electrons raising atoms of the rare gas carrier to a metastable state, collision of the metastable atoms with molecules of the sample effecting ionisation of the molecules.

Starting from DD-A-119 874 and in accordance with another aspect of the present invention, a method for analysing the effluent from a gas chromatographic column for the presence of sample gases employing a rare gas carrier comprises passing the effluent through an ionisation region in the presence of electrons for raising the rare gas atoms to their metastable states, allowing the metastable rare gas atoms to collide with molecules of sample gas to ionise the sample gas molecules and measuring the concentration of ionised sample gas molecules in the ionisation region characterised in that the electrons are released from a solid photoemitter by irradiating the photoemitter with photons which have passed through the ionisation region.

An example of a detector in accordance with the invention will now be described with reference to the accompanying drawings, in which:-

Figure 1 is an illustration in partial cross-section of an argon detector;

Figure 2 is a graph illustrating the response of the detector of Figure 1 with sample loads; and,

Figure 3 is a graph illustrating the variation in the response of the detector of Figure 1 with applied potential.

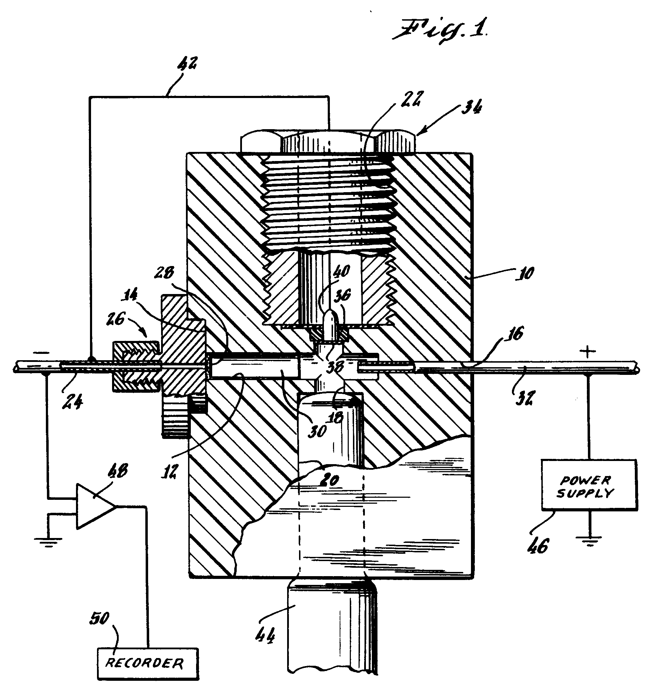

The detector shown in Figure 1 is of the type wherein the electrons raise argon to its metastable state. The body 10 of the detector is a block of a substantially inert, non-metallic material, in this instance, polytetrafluoroethylene (PTFE). The block is drilled to provide a substantially horizontal passage 12 extending from a recess 14 in the left side of body 10 as viewed in Figure 1. The passage 12 is co-axial with a smaller passage 16 which continues out of the right hand side of the body 10. The passage 12 is intersected by a vertical passage 18 which communicates with a well 20 extending out of the bottom of body 10 and a larger tapped opening 22 which extends out the top of body 10.

The end of a chromatographic column 24 is connected into the passage 12 by means of a conventional stainless steel, liquid chromatograph column end fitting 26 carrying a two micron frit disc 28. The fitting is press-fitted into the recess 14 and is in electrical connection with a tubular, copper foil electrode 30 lining the passage 12. The electrode 30, fitting 26 and column 24 comprise the cathode of the detector. The anode comprises a stainless steel tube 32 inserted into the passage 16. In one embodiment the tube 32 had an outer diameter of 1/16 inch (1.6 mm) and an inner diameter of 0.020 inch (0.51 mm).

Screwed into the tapped opening 22 is a threaded plug 34 which is hollow and carries at its end a holder 36 to which is secured, as by cementing, a small piece of photoemissive foil 38. This foil may be any material which is activated by ultra-violet radiation. In one embodiment, approximately three square millimetres of an antimony/caesium (Sb/Cs) alloy foil emitter from an EMI 9781R photoemitter was employed. Other stable photoemitters could also be employed including, for example, the multi-alkali (Na-K-Sb-Cs) photocathode from a Hamamatsu R955 photo-multiplier tube. This material has a high radiation sensitivity between 930 nm and 160 nm. The foil 38 was electrically connected to the cathode by means of a suitable connector 40 and conductor 42. The ultra-violet source for the detector was a Hamamatsu "pencil" ultra-violet lamp 44 inserted into the well 20.

Ultra-violet radiation from the lamp 44 bombards the photoemissive foil 38, resulting in a cloud of electrons in the detection chamber formed by passage 12. When argon (or a similarly acting gas such as helium) is used as the carrier to elute samples from the chromatographic column 24, the argon atoms are raised to their metastable state by electron collisions and then ionize the sample molecules as explained by Lovelock. This causes a current flow across the applied potential between anode 32 and cathode 30 produced by the power supply 46. This current flow is amplified by amplifier 48 and recorded by recorder 50.

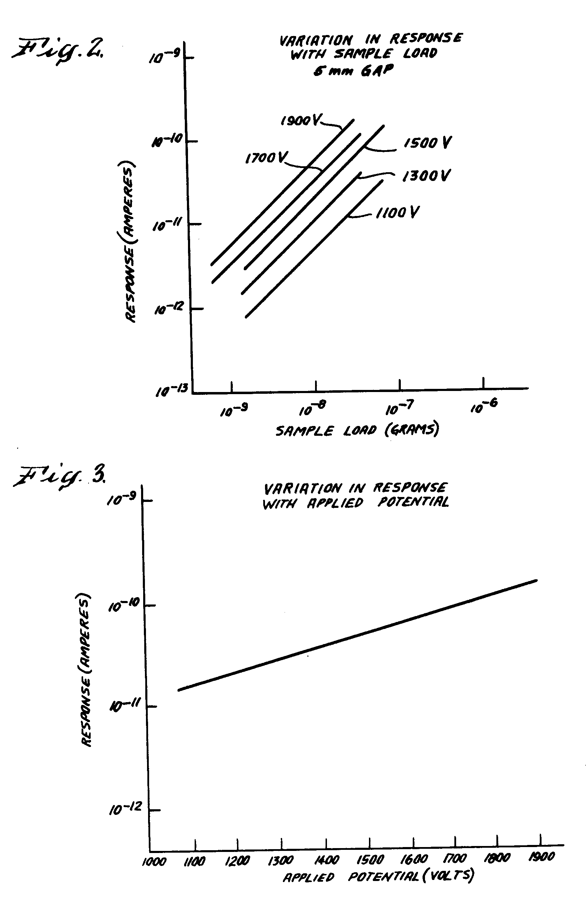

The spatial position of the anode 32 with respect to the cathode 30 determines the level of response at a given applied potential. The response increases with applied potential at a given electrode separation, as illustrated in Figure 3. A good general working condition is a 5 mm electrode gap and fifteen hundred volts applied potential. For more sensitive modes of operation, an increase of applied potential to two thousand volts provides an order of magnitude increase in response, as shown by the graph of Figure 2.

Another factor affecting operation of the detector is the area of emitter foil which is exposed. Obviously, the electron flux is proportional to the surface area of the emitter exposed to the ultra-violet light and also to the intensity of the radiation. Furthermore, it is important that the anode 32 should present a smooth, polished, rounded surface. This avoids arcing at high voltages. Various modifications are also possible. These include, for example, a stainless steel construction utilising a minimum of plastics in order to electrically isolate the anode. Also, the ultra-violet radiation may be introduced via a quartz light pipe and noise reduction may be achieved by introduction of a third electrode to collect the ions produced, as in Lovelock's triode detector.

A number of variations may be made in the design and construction of this modification of electron detector cell. For example, the ultra-violet lamp may be totally contained within the detector body so that ultra-violet energy may radiate over a cylinder the length of the emitter. Alternatively, ultra-violet energy may be passed into a cell through a light pipe having a hemispherical end to ensure even distribution of radiation. These techniques enable construction of a smaller cell which can be more readily scavenged. Another modification employs the ultra-violet lamp as an anode by covering it with a fine metal mesh. Furthermore, scavenging gas may be admitted into the detector cell, ideally as an annular flow close to the walls of the detector cell, while the sample enters the cell axially. This helps protect the emitter from contamination.

## Claims

1. A detector for use in gas chromatography in which a rare gas is used as a carrier to elute samples from a chromatographic column, the detector including a detection chamber, means (32,46,30) for establishing an electrical potential across the chamber, and means (44,38) for supplying free electrons to the chamber, the electron supplying means being positioned adjacent the chamber and comprises a solid photoemissive element (38) and means (44) for irradiating the photoemissive element with ultra-violet radiation to release electrons therefrom, characterised in that the photoemissive element is positioned such that the UV light passes through the chamber before it impinges onto the photoemissive element, the electrons raising atoms of the rare gas carrier to a metastable state, collision of the metastable atoms with molecules of the sample effecting ionisation of the molecules.

2. A detector according to claim 1, wherein the photoemissive element (38) is an alloy comprising antimony and caesium.

3. A detector according to claim 2, wherein the alloy also includes sodium and potassium.

4. A method for analysing the effluent from a gas chromatographic column (24) for the presence of sample gases employing a rare gas carrier which comprises passing the effluent through an ionisation region in the presence of electrons for raising the rare gas atoms to their metastable states, allowing the metastable rare gas atoms to collide with molecules of sample gas to ionise the sample gas molecules and measuring the concentration of ionised sample gas molecules in the ionisation region characterised in that the electrons are released from a solid photoemitter by irradiating the photoemitter with photons which have passed through the ionisation region.

5. A method according to claim 4, wherein the rare gas is argon.

**Patentansprüche**

1. Detektor für die Gaschromatographie, bei der ein Edelgas als Träger zum Eluieren von Proben aus einer chromatographischen Säule verwendet wird, mit einer als Detektor dienenden Kammer, mit Hilfsmitteln (32 46, 30) zum Aufbau eines elektrischen Potentials an der Kammer, mit einer Vorrichtung (44, 38) für eine Zufuhr freier Elektronen zu der Kammer und mit einer der Kammer benachbart angeordneten Einrichtung für die Lieferung von Elektronen, die ein festes, lichtemittierendes Element (38) und Hilfsmittel (44) zur Einstrahlung von Ultraviolett auf das lichtemittierende Element zum Auslösen von Elektronen enthält, dadurch gekennzeichnet, daß das lichtemittierende Element derart angeordnet ist, daß die ultraviolette Strahlung vor ihrem Auftreffen auf dem lichtemittierenden Element durch die Kammer hindurchfällt, wobei die Elektronen die Atome des als Träger wirkenden Edelgases in einen metastabilen Zustand anheben und ein Zusammenprall der metastabilen Atome mit den Molekülen der Probe eine Ionisierung der Moleküle bewirkt.

2. Detektor gemäß Anspruch 1, bei dem das lichtemittierende Element (38) eine Legierung aus Antimon und Cäsium ist.

3. Detektor gemäß Anspruch 2, bei dem die Legierung außerdem Natrium und Kalium enthält.

4. Verfahren zum Analysieren des Eluats von einer gaschromatographischen Säule (24) im Hinblick auf Gase in der Probe unter Verwendung eines Edelgases als Träger, bei dem das Eluat durch einen Ionisierungsbereich in Gegenwart von Elektronen hindurchgeht, um die Atome des Edelgases in ihre metastabilen Zustände zu heben, bei dem die metastabilen Atome des Edelgases mit den Molekülen des Probegases zu deren Ionisierung zusammenprallen, und bei dem die Konzentration der ionisierten Moleküle des Proben-Gases im Ionisierungsbereich gemessen werden, dadurch gekennzeichnet, daß die Elektronen von einem festen Photoemitter durch dessen Bestrahlung mit Photonen ausgelöst werden, die durch den Ionisierungsbereich hindurchgegangen sind.

5. Verfahren gemäß Anspruch 4, bei dem das Edelgas Argon ist.

**Revendications**

1. Détecteur utilisable en chromatographie en phase gazeuse dans laquelle un gaz rare est utilisé comme vecteur pour éluer les échantillons d'une colonne chromatographique, le détecteur comprenant une chambre de détection, des moyens (32, 46, 30) pour établir un potentiel électrique dans la chambre et des moyens (44, 38) pour fournir des électrons libres à la chambre, les moyens fournissant les électrons étant situés en position adjacente à la chambre, et comprenant un élément photoémissif solide (38) et un moyen (44) pour irradier l'élément photoémissif par un rayonnement ultraviolet pour en libérer des électrons, caractérisé en ce que l'élément photoémissif est positionné de telle manière que la lumière UV traverse la chambre avant de frapper l'élément photoémissif, en ce que les électrons amènent les atomes du vecteur constitué par un gaz rare dans un état métastable, et en ce que la collision des atomes métastables avec les molécules d'échantillon provoque l'ionisation des molécules.

2. Détecteur selon la revendication 1, dans lequel l'élément photoémissif (38) est un alliage comprenant de l'antimoine et du césium.

3. Détecteur selon la revendication 2, dans lequel l'alliage comprend également du sodium et du potassium.

4. Procédé pour analyser l'effluent provenant d'une colonne de chromatographie en phase gazeuse (24) en ce qui concerne la présence de gaz échantillons à l'aide d'un vecteur constitué par un gaz rare, qui comprend le passage de l'effluent dans une région d'ionisation en présence d'électrons pour amener les atomes de gaz rare dans leurs états métastables, le fait de permettre aux atomes de gaz rare métastables d'entrer en collision avec les molécules de gaz échantillons pour ioniser les molécules de gaz échantillons et la mesure de la concentration des molécules de gaz échantillons ionisées dans la région d'ionisation, caractérisé en ce que les électrons sont libérés par un photoémetteur solide par irradiation du photoémetteur avec des photons qui ont traversé la région d'ionisation.

5. Procédé selon la revendication 4, dans lequel le gaz rare est l'argon.

*Fig.1.*

Fig. 2.

VARIATION IN RESPONSE
WITH SAMPLE LOAD
6 mm GAP

1900 V

1700 V

1500 V

1300 V

1100 V

$10^{-9}$

$10^{-10}$

$10^{-11}$

$10^{-12}$

$10^{-13}$

RESPONSE (AMPERES)

$10^{-9}$     $10^{-8}$     $10^{-7}$     $10^{-6}$

SAMPLE LOAD (GRAMS)

Fig. 3.

VARIATION IN RESPONSE
WITH APPLIED POTENTIAL

$10^{-9}$

$10^{-10}$

$10^{-11}$

$10^{-12}$

RESPONSE (AMPERES)

1000  1100  1200  1300  1400  1500  1600  1700  1800  1900

APPLIED POTENTIAL (VOLTS)